# EUROPEAN PATENT APPLICATION

(11) **EP 3 816 433 A1**
(43) Date of publication of application: **05.05.2021**
(21) Application number: 19825416.1
(22) Date of filing: 11.03.2019
(51) Int. Cl.: F03B 13/26, F03B 17/06, F03B 15/06, F03B 3/18, F03B 11/08

(54) **MOVABLE AND SEMI-SUBMERGED POWER GENERATOR USING WATERWHEEL TURBINE**

(30) Priority: 26.06.2018 KR 20180073333
(71) Applicant: Oh, Yoon Keun, Incheon 21962 (KR); Oh, Min Hwan, Incheon 22386 (KR)
(72) Inventor: Oh, Yoon Keun, Incheon 21962 (KR); Oh, Min Hwan, Incheon 22386 (KR)
(74) Representative: Hörschler, Wolfram Johannes
(86) International application number: PCT/KR2019/002770
(87) International publication number: WO 2020/004770

(57) **Abstract**

The present invention relates to a movable and semi-submerged power generator using a waterwheel turbine, which can easily be moved to a location where a flow of a fluid occurs, prevents movement by current of water due to being a semi-submerged type, and efficiently produces energy by means of a flow rate control and cutoff of the fluid and expansibility of the turbine. The power generator comprises: an upper structure having first and second structures including first and second balancing tanks and first and second machine rooms; a lower structure disposed on the lower portion of the upper structure and including a fluid flowing hole, a first round, and a fluid guide hole through which the fluid can flow; a turbine rotated by the movement of the fluid; an energy generation means for producing electricity by the turbine; and a fixing means. Thus, the power generator is floatable and movable on water so as to be moved to and installed in various locations. The first and second balancing tanks are filled with the fluid such that the power generator can be semi-submerged, and the height of the turbine is disposed at a position so that a shaft can be placed above the water surface such that the turbine is smoothly rotated, while preventing shaking by waving of the fluid and turning of the power generator, thereby improving energy production efficiency. Also, the fluid under the water surface is guided in a direction capable of operating the turbine while maximally preventing disruption to the flow of the fluid moving to the turbine through the first round of the lower structure, thereby improving energy production efficiency.

## Description

### [Technical Field]

The present invention relates to a movable and semi-submerged power generator using a waterwheel turbine, which can be easily moved to a location where a flow of a fluid occurs, prevent movement by current of water due to the semi-submerged configuration thereof, and efficiently produce energy through flow rate control and cutoff of the fluid and expansibility of the turbine.

### [Background Art]

Typical power generation methods may include hydropower, thermal power, and nuclear power. These power generation methods require large-scale power generation facilities. In the case of thermal power generation, supply of a huge amount of oil or coal is required to operate power generation facilities. Currently, oil and coal reserves are being depleted. In this regard, many difficulties are expected and pollution is becoming a big problem.

Particularly in the case of nuclear power generation, radioactive leakage and nuclear waste treatment raise serious issues.

Therefore, there is a need for an innovative power generation method that is cheaper and safer than the general power generation methods.

There are various power generation methods that do not require oil or coal and do not raise issues related to radioactivity or nuclear waste, such as solar power generation, wave power generation, tidal power generation, and wind power generation.

Tidal power generation uses the force of water moving horizontally according to the ebb and flow of the tides.

In other words, the sea level gradually rises as the tide changes from low tide to high tide, and accordingly the tide moves horizontally toward the coast. In tidal power generation, a waterwheel is installed on the inflow side of the tide. Thus, when the waterwheel is rotated by the tide, electric power is generated by driving the generator by the rotational force.

Since the regular horizontal movement of the tides is always made as long as the earth and the moon exist, many studies on tidal power generation are being conducted.

In most conventional cases, tidal power generators are installed in fixed places and the waterwheels are arranged in a fixed direction.

However, the direction and tidal power of the tide frequently change over time. Accordingly, the conventional tidal power generators may not efficiently generate power according to the change of the tide.

In order to address these issues, Korean Patent No. 10-0995918 (hereinafter referred to as "Patent Document 1") has been proposed.

Patent Document 1 discloses that a bottom plate is provided between buoyancy tanks, and a turbine is provided at the tip thereof. Thus, the fluid passing through the space between the buoyancy tanks rotates the turbine, thereby generating power by a power generation device connected to the rotating turbine.

(Patent Document 1) KR10-0995918 B1, "TIDAL POWER GENERATION SYSTEM FLOATING ON THE SEA"

### [Disclosure]

### [Technical Problem]

However, in Patent Document 1 described above, although the amount of water supplied to the turbine is controlled using a second sluice gate, the water surface is located at a position higher than the central axis of the turbine, and thus it is difficult to rotate the turbine.

In addition, when failure or the like occurs in the turbine, it should be checked. In Patent Document 1, an element capable of controlling a fluid flow is not disclosed, and therefore there is a difficulty in performing maintenance.

### [Technical Solution]

In accordance with the present disclosure, the above and other objects can be accomplished by the provision of a movable and semi-submerged power generator using a waterwheel turbine, the power generator including: an upper structure including a first structure including a first balancing tank configured to adjust balancing by adjusting buoyancy and a first machine room; and a second structure spaced apart from the first structure and including a second balancing tank and a second machine room; a lower structure coupled to a lower portion of the upper structure and defining a fluid flow hole extending therethrough in a longitudinal direction of the upper structure, the lower structure including a first round portion formed on a side thereof receiving a fluid flowing thereinto, and a fluid guide hole formed with a predetermined curvature at an end of the first round portion; a turbine disposed between the first and second structures of the upper structure and connected to the first and second machine rooms constituting the first and second structures by a shaft, the turbine including an inner diameter, an outer diameter, and a plurality of blades configured to be rotated by force from the fluid passing through the fluid guide hole of the lower structure; an energy generation means disposed in the first and second machine rooms of the upper structure to generate energy by rotational force of the shaft coupled to the turbine; a first gate provided to a portion of the upper structure between the first round portion and the fluid guide hole of the lower structure to adjust a flow rate of the fluid and block a flow of the fluid; and a fixing means disposed in water to fix the upper and lower structures, wherein the first and second balancing tanks formed in the first and second structures of the upper structure allow the fluid to be introduced thereinto such that a submerged portion of the first and second balancing tanks has a height greater than a portion thereof exposed outside above a water surface, wherein the first and second structures of the upper structures are provided with first guide portions for guiding the fluid formed on a side thereof receiving the fluid flowing thereinto.

### [Advantageous Effects]

The present invention is configured to float and be movable in water through first and second balancing tanks formed in an upper structure, and thus may be installed at various locations. In particular, it may be rotated and moved in any direction according to the flow direction of the fluid, and therefore energy generation efficiency may be enhanced.

In addition, the first and second balancing tanks may be filled with a fluid such that the present invention is semi-submerged, and the turbine may be arranged at a vertical position where the axis thereof is above the water surface. Thereby, fluctuation of the fluid may be prevented from causing shaking and rotation of the present invention, and the turbine may rotate smoothly. Accordingly, energy generation efficiency may be improved.

In addition, the fluid under the water may be guided in a direction in which the fluid drives the turbine, while interference with the flow of fluid moving to the turbine is suppressed as much as possible through a first round portion of a lower structure. Thereby, energy generation efficiency may be improved

In addition, a first gate capable of controlling the flow rate of the fluid and blocking the fluid is formed in the upper structure to control the turbine. Thereby, efficient energy generation may be implemented and maintenance of the turbine may be facilitated.

In addition, the turbine may be manufactured so as to operate in parallel, in series and in opposite directions according to the installation location of the present invention, thereby enhancing energy generation efficiency.

In addition, as a foreign substance blocking part is formed to face in a direction in which the fluid moves, there may be no risk of failure of the turbine caused by infiltration of foreign substances.

### [Description of Drawings]

FIG. 1 is a plan view showing a movable and semi-submerged power generator using a waterwheel turbine according to the present invention.
FIG. 2 is a cross-sectional view taken along line A-A of FIG. 1.
FIG. 3 is a diagram showing another embodiment of the upper structure according to the present invention.

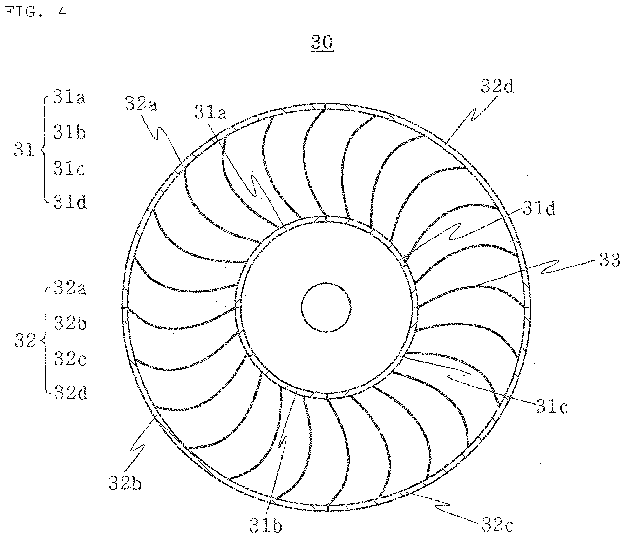

FIG. 4 is a diagram showing another embodiment of the turbine according to the present invention.
FIG. 5 is a diagram illustrating turbines connected in series according to the present invention.
FIG. 6 is a first diagram illustrating rotation of the turbine in both directions according to the present invention.
FIG. 7 is a second diagram illustrating rotation of the turbine in both directions according to the present invention.
FIG. 8 is a diagram illustrating a configuration in which a house is formed on the upper side of the upper structure according to the present invention.
FIG. 10 is a diagram showing another embodiment of the fixing means according to the present invention.

### [Best Mode]

Hereinafter, the configuration of the present invention will be described in detail with reference to the accompanying drawings.

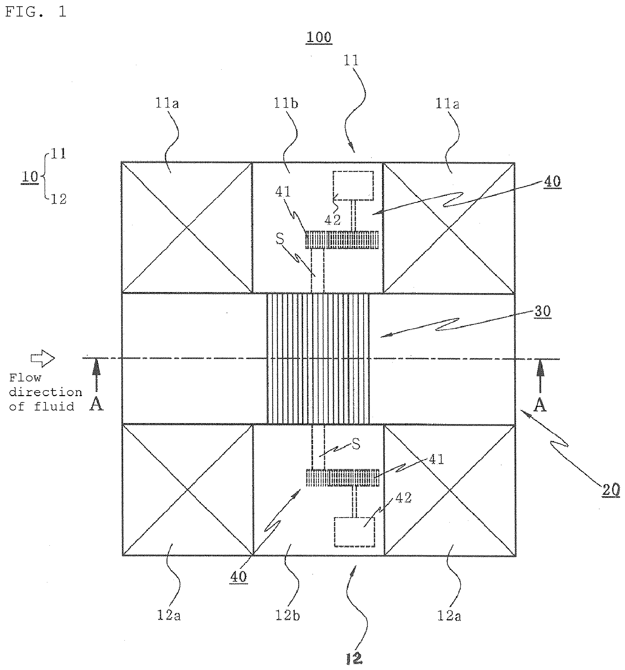

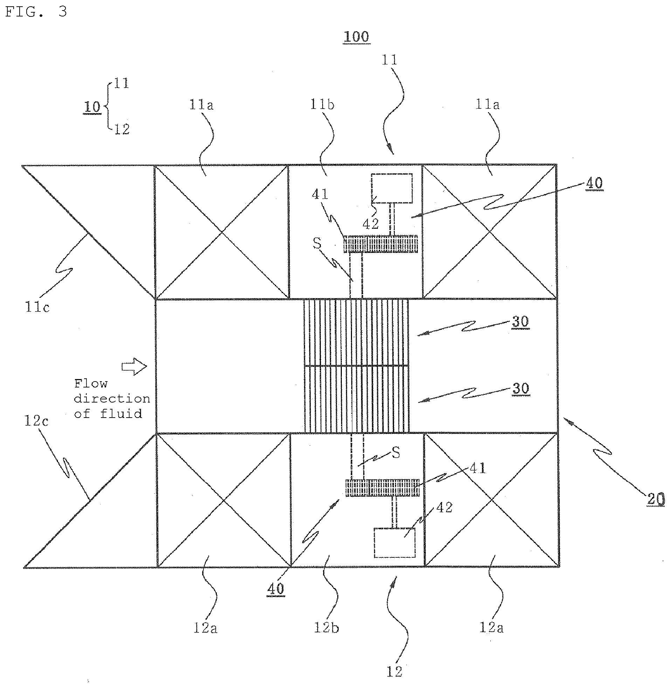

As shown in FIG. 1 and FIG. 3, an upper structure 10 includes first and second structures 11 and 12 arranged spaced apart from each other by a specific distance.

As shown in FIG. 1, the first structure 11 has a first balancing tank 11a capable of adjusting buoyancy by accommodating a fluid therein, and a first machine room 11b provided on one side thereof.

Similar to the first structure 11, the second structure 12, which is manufactured in a shape symmetrical to the first structure 11, includes a second balancing tank 12a and a second machine room 12b.

In particular, since the present invention is configured to float on a fluid to generate electricity by the flow of the fluid occurring in the sea or river, at least four first and second balancing tanks 11a and 12a are formed to meet the balance. Here, the amount of fluid in the first and second balancing tanks 11a and 12a is adjusted such that the height of a portion of the first and second balancing tanks 11a and 12a that is submerged below the water is greater than the height of the other portion that is exposed to the outside of the water.

Moreover, although not shown in detail in the drawings, the operation of supplying a fluid into the first and second balancing tanks 11a and 12a or discharging the fluid may be performed by automatic, not manual, electronic control.

Here, the first and second structures 11 and 12 constituting the upper structure 10 described above may include a first guide 11c, 12c on the side from which the fluid is introduced in order to guide more fluid when the fluid flows, as shown in FIG. 3.

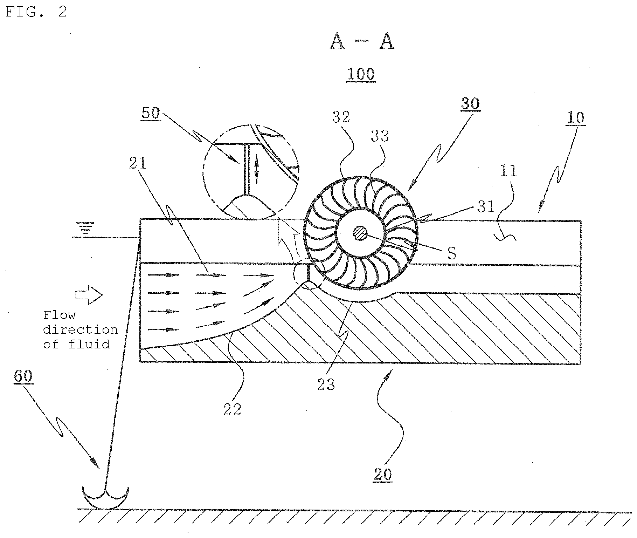

Next, a lower structure 20 is integrally formed at the lower end of the upper structure 20 as shown in FIG. 2, and defines a fluid flow hole 21 for movement of a fluid together with the upper structure 10.

The fluid flow hole 21 is formed through the upper and lower structures 10 and 20 of the present invention such that the fluid can pass through the space between the upper and lower structures 10 and 20.

Here, a first round portion 22 is formed at the inlet side of the fluid flow hole 21.

The first round portion 22 has a streamlined shape capable of guiding the lower side fluid upward as the fluid moves in the fluid flow direction.

In addition, a fluid guide hole 23 having a predetermined curvature is formed at a position where the first round portion 22 ends.

Next, a turbine 30 is connected to the first and second machine rooms 11b and 12b formed in the first and second structures 11 and 12 of the upper structure 10 by a shaft S as shown in FIGS. 1 and 2, and is rotated by the fluid passing through the fluid guide hole 22.

The turbine 30 is composed of an inner diameter 31 and an outer diameter 32. The outer diameter 32 is provided with a plurality of blades 33 such that the rotational motion of the turbine 30 can occur due to the flow of the fluid.

Here, the sizes of the inner diameter 31 and the outer diameter 32 vary depending on the position at which the above-described blades 30 are applied. When the size of the inner diameter 31 or the sizes of the inner diameter 31 and the outer diameter 32 are excessively large, it is difficult to manufacture the turbine as an integrated type at once (manufacture an integrated turbine?).

Therefore, in the present invention, when the sizes of the inner diameter 31 and the outer diameter 32 are excessively large, multiple inner diameter units 31a, 31b, 31c, 31d and outer diameter units 32a, 32b, 32c, 32d are individually manufactured, and then combined together by a coupling means (not shown) to manufacture the turbine 30.

The turbine 30 described above is disposed between the upper and lower structures 10 and 20 so as to be rotated by the flow of fluid.

When the shaft S of the turbine 30 is disposed at a position where the shaft is submerged, the turbine 30 may not be rotated by the flow of fluid. Accordingly, the vertical position of the turbine 30 may be set such that the shaft S is not positioned below the water surface.

In particular, the fluid guide hole 23 of the lower structure 20 where the turbine 30 is located may be formed with a curvature that can form a concentric circle on the same central axis as the turbine 30 such that the rotation of the turbine 30 can occur more efficiently by the fluid passing through the fluid guide hole 23.

Next, an energy generation means 40 is provided to generate energy by the rotational motion of the shaft S when the shaft S rotates by the rotation of the turbine 30.

Accordingly, the energy generation means 40 according to the present invention is disposed in the first and second machine rooms 11b and 12b of the first and second structures 11 and 12 constituting the upper structure 10 and connected to the shat S to covert the rotational motion of the shaft into energy.

The energy generation means 40 may include, but is not limited to, a gearbox 41 capable of increasing the speed of rotation of the shaft S and a generator 42 connected to the speed increaser 41 to generate electricity.

Next, as shown in FIG. 2, a first gate 50 is coupled to the upper structure 10 at a position between the first round portion 22 and the fluid guide hole 23 of the lower structure 20 to block the flow of a fluid passing through the fluid flow hole 21 or to control the amount of movement of the fluid.

In other words, the first gate may remain inserted into the upper structure 10 in normal times and may move downward toward the lower structure 20 to adjust the flow rate of the fluid under control by a user when a sudden increase in flow rate occurs. In a situation where the operation of the turbine 30 should be stopped, the first gate may be controlled to contact the lower structure 20 to block the fluid to stop the operation of the turbine 30.

Next, a fixing means 60 is provided to anchor the present invention so as not to move away along the flow of fluid.

In the present invention, when the spacing between the first and second structures 11 and 12 constituting the upper structure 10 is wide, multiple turbines 30 may be connected to the shaft S in parallel to increase the rotational force of the shaft S by the flow of fluid, as shown in FIG. 3.

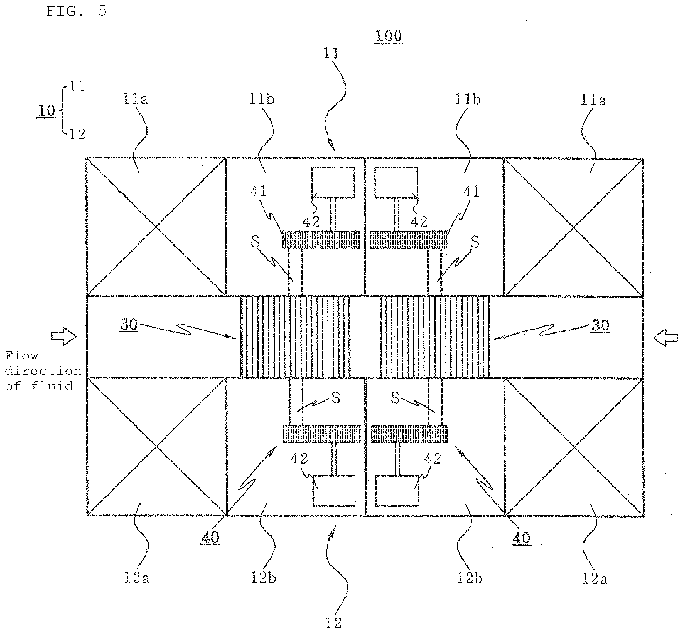

In addition, in the present invention, multiple sets of the turbine 30 and the energy generation means 40 configured to generate energy by the turbine 30 and arranged in series therewith may be configured to increase energy generation efficiency, as shown in FIG. 5.

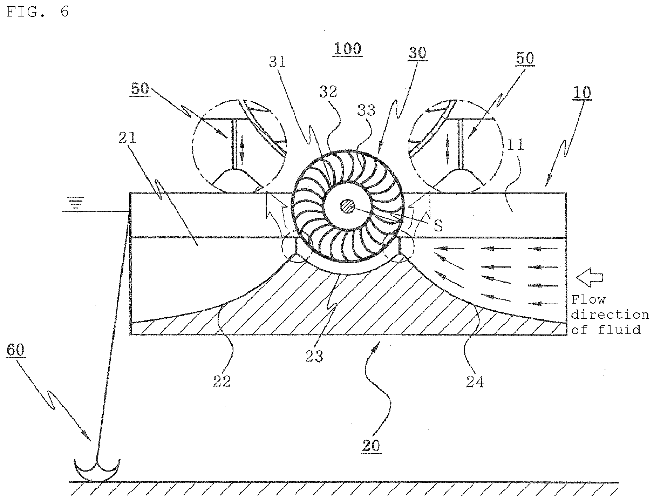

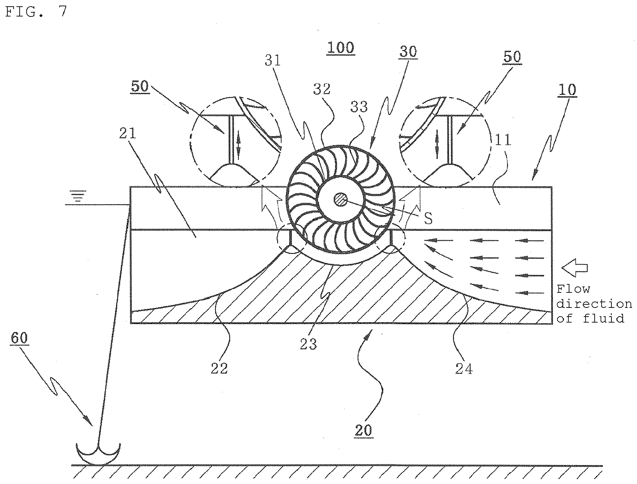

As shown in FIGS. 6 and 7, the turbine 30 may be configured to change the orientation of the blades 33 so as to rotate in both directions. One side of the fluid flow holes 21 may define a first round portion 22, and an opposite side thereof may define a second round portion 24. A second gate 70 may be additionally arranged between the fluid guide hole 23 and the second round portion 24.

Since the present invention floats at sea or in a river, it requires a supervisor to be on constant alert.

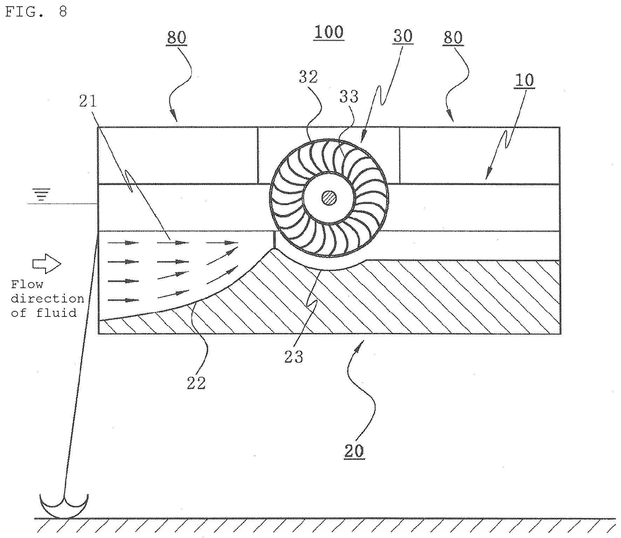

Accordingly, as shown in FIG. 8, the present invention may further include a house 80 disposed on top of the upper structure 10 to allow the supervisor to rest therein.

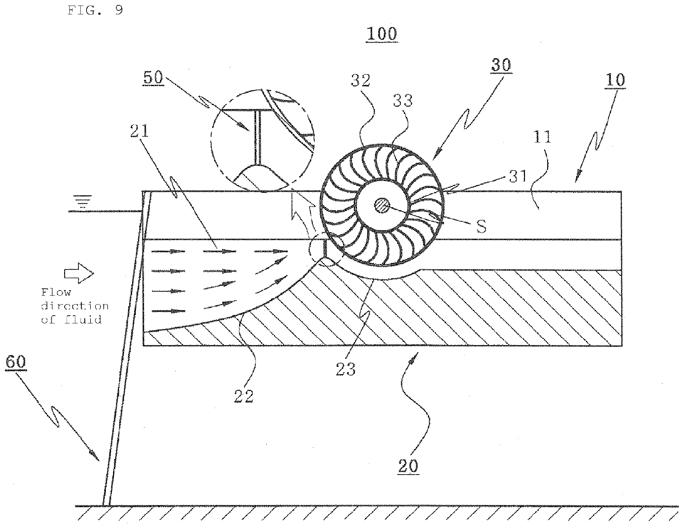

The fixing means 60 according to the present invention may be formed in an anchor shape as shown in FIG. 8, or may be formed in the shape of a pile operated by hydraulic pressure as in FIG. 9.

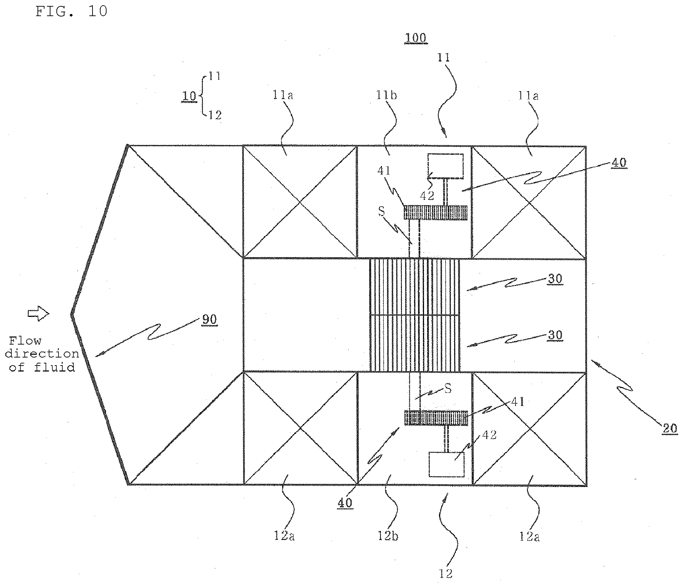

In addition, as shown in FIG. 10, the present invention may further include a foreign substance blocking part 90 arranged on the side from which the fluid is introduced in order to block inflow of foreign substances.

Although not shown in detail in the drawings, the foreign substance blocking part 90 is capable of descending to a position deeper than the depth at which the lower structure 20 is submerged, and may have a structure in which multiple lattices are formed.

In particular, the structure forming the lattice net may be used in the form of a common mesh, or may be formed by combining multiple round portion bars.

Operation of the movable and semi-submerged power generator using a waterwheel turbine configured as above according to the present invention will be described below.

First, the energy generation process of the movable and semi-submerged power generator 100 using a waterwheel turbine according to the present invention will be briefly described. The process is based on a simple principle. Resistance is caused on the blades 33 of the turbine 30 by the flowing fluid, thereby rotating the turbine 30 and the shaft S. The energy generation means 40 is operated by the rotation of the shaft S to generate and store energy.

The present invention is configured to float in water by the first and second balancing tanks 11a and 12a constituting the first and second structures 11 and 12 of the upper structure 10 in generating energy according to the above-described operation principle.

Accordingly, the user can move the present invention with a tugboat (not shown) or the like in consideration of the direction of the fluid flow and the flow velocity of the fluid. Accordingly, energy generation efficiency may be improved.

Here, in the present invention, the first and second balancing tanks 11a and 12a constituting the first and second structures 11 and 12 are floated by buoyancy by injecting a fluid thereinto. In particular, the buoyancy is formed such that the height of a portion of the first and second balancing tanks 11a and 12a exposed to the outside of the water is greater than the height of a portion thereof that is below the water surface. Thus, the tanks remain floating in a semi-submerged state, and accordingly they may be little rocked by the water current and remain afloat without being affected by the water current. Thereby, the operation of generating energy through the turbine 30 and the energy generation means 40 may be efficiently performed.

In addition, the height position of the turbine 30 according to the present invention is set such that the shaft S rotated by the turbine 30 is disposed above the water surface as shown in FIG. 2.

Accordingly, by allowing the fluid passing through the fluid guide hole 23 of the lower structure 20 to smoothly rotate the turbine 30 while colliding with the blades 33 of the turbine 30, energy generation efficiency may be enhanced.

The blades 33 of the turbine 30 are rotated by resistance against the fluid passing through the fluid guide hole 23 of the lower structure 20.

In particular, since the fluid guide hole 23 is formed with a curvature that can form a concentric circle on the same central axis as the turbine 30 as shown in FIG. 2, the fluid is guided in a direction in which the fluid can generate force to push the blades 33 by the fluid guide hole 23, and therefore the turbine 30 may be rotated more efficiently.

In addition, as shown in FIGS. 2 to 3, in the present invention, the fluid flow hole 21 through which a fluid can move is configured in the lower structure 20 arranged under the upper structure 10. In particular, a first round portion 22 formed in a streamlined shape to guide the fluid as it extends in the flow direction of the fluid is provided on the side from which the fluid is introduced, and the first and second structures 11 and 12 on the side from which the fluid is introduced are provided with first guides 11c and 12c.

Therefore, a large amount of fluid is guided to the turbine 30, and the flow rate is increased by the Venturi effect. Then, rotation of the turbine 30 is accelerated by the increased flow rate. Thereby, energy generation efficiency may be enhanced.

In addition, in the present invention, the first gate 50 movable downward is provided to a portion of the upper structure 10 positioned on the upper side between the first round portion 22 and the fluid guide hole 23.

When the flow rate suddenly increases, the position of the first gate 50 may be adjusted to adjust the flow rate. Thereby, the first gate may protect the turbine 30 and the energy generation means 40 connected thereto. In addition, the first gate 50 may be completely lowered so as to block the space between the first round portion 22 of the lower structure 20 and the fluid guide hole 23. Accordingly, the first gate may be useful for maintenance of the turbine 30, the energy generation means 40, or the like.

The present invention may be designed in a larger size. In particular, when the spacing between the first and second structures 11 and 12 constituting the upper structure 10 as shown in FIG. 3 is wide, the torque of the shaft S may be improved by connecting multiple turbines 30 to the shaft S. When the turbine 30 and the energy generation means 40 coupled thereto are connected in series as shown in FIG. 5, a large amount of energy may be generated.

In particular, although not shown in the drawings, the blades 33 of the turbine 30 may be configured to rotated in both directions. Alternatively, as shown in FIGS. 6 and 7, the blades 33 may be formed such that the orientation thereof is manually changed, and the first and second round portions 22 and 24 may be formed on both sides of the fluid guide hole 23 of the lower structure 20, and a second gate 70 may be further provided between the fluid guide hole 23 and the second round portion 24. In this case, energy may be continuously generated when the user adjusts the blades 33 according to the flow direction of the fluid. The user does not need to rotate the present invention according to the flow direction of the fluid.

Further, when the house 80 is configured on the upper side of the upper structure 10 of the present invention, the supervisor may stay therein and continuously perform the energy generation operation using the present invention.

In addition, when the foreign substance blocking part 90 is provided on the side from which the fluid is introduced, foreign substances may be prevented from causing failure of the turbine 30, and thus operation may be continuously performed.

## Claims

1. A movable and semi-submerged power generator using a waterwheel turbine, the power generator comprising:
an upper structure (10) comprising:
a first structure (11) including a first balancing tank (11a) configured to adjust balancing by adjusting buoyancy and a first machine room (11b); and
a second structure (12) spaced apart from the first structure and including a second balancing tank (12a) and a second machine room (12b);
a lower structure (20) coupled to a lower portion of the upper structure (10) and defining a fluid flow hole (21) extending therethrough in a longitudinal direction of the upper structure (10), the lower structure comprising a first round portion (22) formed on a side thereof receiving a fluid flowing thereinto, and a fluid guide hole (23) formed with a predetermined curvature at an end of the first round portion (22);
a turbine (30) disposed between the first and second structures (11, 12) of the upper structure (10) and connected to the first and second machine rooms (11a, 12b) constituting the first and second structures (11, 12) by a shaft (S), the turbine comprising an inner diameter (31), an outer diameter (32), and a plurality of blades (33) configured to be rotated by force from the fluid passing through the fluid guide hole (23) of the lower structure (20) ;
an energy generation means (40) disposed in the first and second machine rooms (11b, 12b) of the upper structure (10) to generate energy by rotational force of the shaft (S) coupled to the turbine (30);
a first gate (50) provided to a portion of the upper structure (10) between the first round portion (22) and the fluid guide hole (23) of the lower structure (20) to adjust a flow rate of the fluid and block a flow of the fluid; and
a fixing means (60) disposed in water to fix the upper and lower structures (10, 20),
wherein the first and second balancing tanks (11a, 12a) formed in the first and second structures (11, 12) of the upper structure (10) allow the fluid to be introduced thereinto such that a submerged portion of the first and second balancing tanks (11a, 12a) has a height greater than a portion thereof exposed outside above a water surface,and
wherein the first and second structures (11, 12) of the upper structures (10) are provided with first guide portions (11c, 12c) for guiding the fluid formed on a side thereof receiving the fluid flowing thereinto.

2. The power generator of claim 1, wherein the turbine (30) is disposed at a vertical position such that the shaft (S) rotated by the turbine (30) is not submerged below the water surface.

3. The power generator of claim 1, wherein the outer diameter (32) or the inner diameter (31) and the outer diameter (32) comprise a plurality of inner diameter units (31a, 31b, 31c, 31d) or inner and outer diameter units (31a, 31b, 31c, 31d, 32a, 32b, 32c, 32d) depending on a size of a total diameter of the turbine (30).

4. The power generator of claim 1, wherein, when spacing between the first and second structures (11, 12) constituting the upper structure (10) is wide, the turbine (30) comprises a plurality of turbines coupled to the shaft (S) in parallel in a direction perpendicular to a movement direction of the fluid.

5. The power generator of claim 1, wherein a plurality of sets of the turbine (30) and the energy generation means (40) is provided, the turbine (30) and the energy generation means (40) being arranged in series in a movement direction of the fluid.

6. The power generator of claim 1, the turbine (30) is configured to change orientation of the blades (33) to rotate in both directions,
wherein one side of the fluid flow hole (21) of the lower structure (20) is provided with the first round portion (22), and an opposite side thereof is provided with a second round portion (24),
the power generator further comprising:
a second gate (70) provided to a portion of the upper structure (10) between the second round portion (24) and the fluid guide hole (23) to operate in the same manner as the first gate (50).

7. The power generator of claim 1, wherein the fixing means (60) is formed in an anchor shape or a shape of a pile extendable to a bottom surface by hydraulic pressure.

8. The power generator of claim 1, further comprising:
a house (80) provided on an upper portion of the upper structure (10) to allow a supervisor to take a rest therein.

9. The power generator of claim 1, further comprising:
a foreign substance blocking part (90) arranged on a side of the upper and lower structures (10, 20) receiving the fluid introduced thereinto to block introduction of foreign substances.
